# EUROPEAN PATENT SPECIFICATION

(11) **EP 2 243 967 B1**
(45) Date of publication and mention of the grant of the patent: **25.01.2017**
(21) Application number: 10159484.4
(22) Date of filing: 09.04.2010
(51) Int. Cl.: F16B 7/04

(54) **Clamp assembly for holding elongated parts**
Klammeranordnung zum Halten länglicher Teile
Ensemble de serrage pour supporter des pièces allongées

(30) Priority: 22.04.2009 US 428122
(43) Date of publication of application: 27.10.2010
(73) Proprietor: Deere & Company, Moline, IL 61265 (US)
(72) Inventor: Bruss, Paul T, Cedar Falls, IA 50613 (US); Newhouse, James A, Waterloo, IA 50701 (US); Landers, Trace D, Denver, IA 50622 (US)
(74) Representative: Dehnhardt, Florian Christopher

(56) References cited:
- DE-C1- 3 602 625
- FR-A1- 2 280 013
- FR-A5- 2 182 496
- US-A- 5 742 982

## Description

The present invention relates to a clamp assembly for holding elongated parts like lines, hoses and harnesses which are routed through and around a structure, such as a frame of a vehicle.

Vehicles include lines, hoses and harnesses which must be routed through and around a frame of the vehicle. Clamps are used to keep such components from vibrating and producing noise. Often such lines, hoses and harnesses must be routed through spaces which are so tight that there is not enough room for conventional clamps. For example, on some vehicles, such lines, hoses and harnesses must be routed between roof mounted components and chassis components in order to provide fluid and electrical communication therebetween. One possible routing for this situation would be to route the lines, hoses and harnesses parallel to and outside the cab posts which support the roof. However, lines, hoses and harnesses outside of the cab posts can interfere with visibility and interfere with the location of mirrors, hand rails, and lights. Placing them inside the posts leaves no room for conventional fasteners to hold clamps in place.

FR 2 280 013 A1 describes a clamp assembly which has a mounting bracket for circumferentially engaging two clamping inserts made from resilient material. Each of the clamping inserts comprises a multiplicity of mounting openings for receiving respective conduits. The mounting bracket can be attached to a supporting structure by means of a flange.

An object of this invention is to provide a clamp assembly which is even more compact and can be used in very tight locations.

This and other objects are achieved by the present invention, wherein a clamp assembly for holding elongated parts comprises an inner housing and an outer housing for attaching to the inner housing. An inner half clamp member is received by the inner housing. The inner half clamp member has an inner groove receiving flexible hoses, and an outer groove receiving rigid lines. The inner half clamp member is formed out of a rigid material. An outer half clamp member is formed out of a resilient material. The outer half clamp member is compressed between the outer housing and the inner half clamp member. The rigid lines are held between the inner half clamp member and the outer half clamp member.

For a complete understanding of the objects, techniques, and structure of the invention reference should be made to the following detailed description and accompanying drawings, wherein similar components are designated by identical reference numerals:
- Fig. 1: is an exploded perspective view showing a clamp assembly according to the present invention,
- Fig. 2: is a perspective view of the clamp assembly according to Fig. 1,
- Fig. 3: is a detailed exploded perspective view of the clamp assembly according to Fig. 2,
- Fig. 4: is a perspective view of an inner clamp member of the clamp assembly according to Fig. 2,
- Figs. 5: is a first perspective view of an outer clamp member of the clamp assembly according to Fig. 2,
- Fig. 6: is a second perspective view of an outer clamp member of the clamp assembly of Fig. 2, and
- Fig. 7: is a top end view of the clamp assembly according to Fig. 1, with a portion sectioned for clarity.

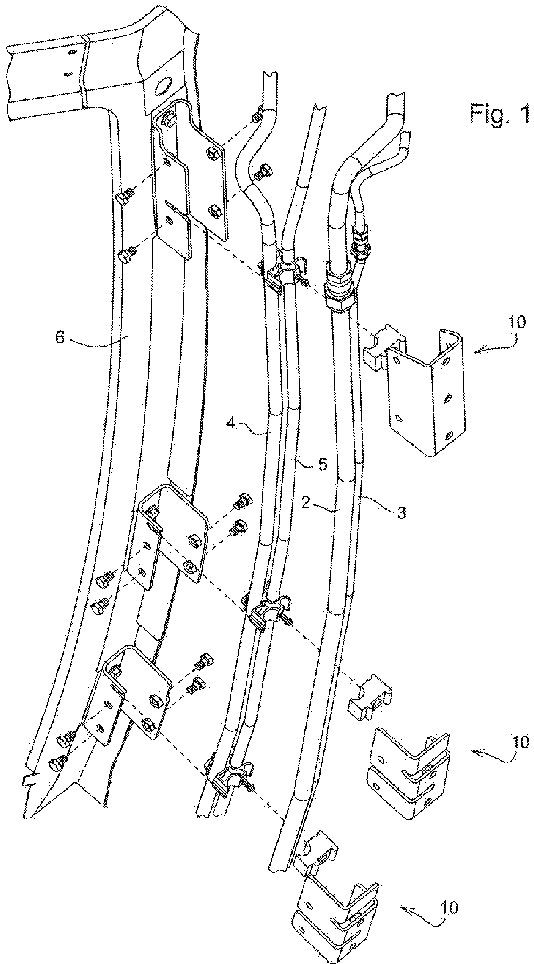

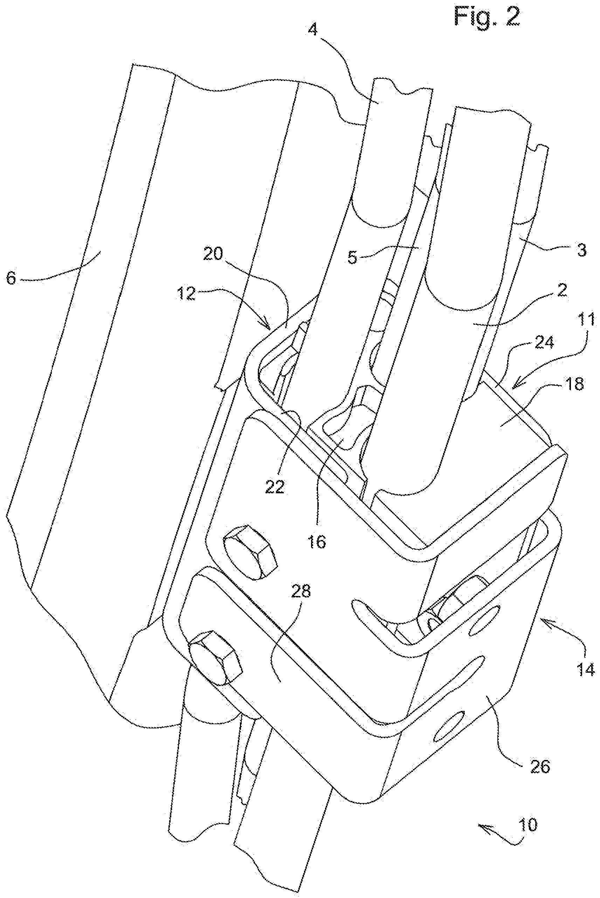

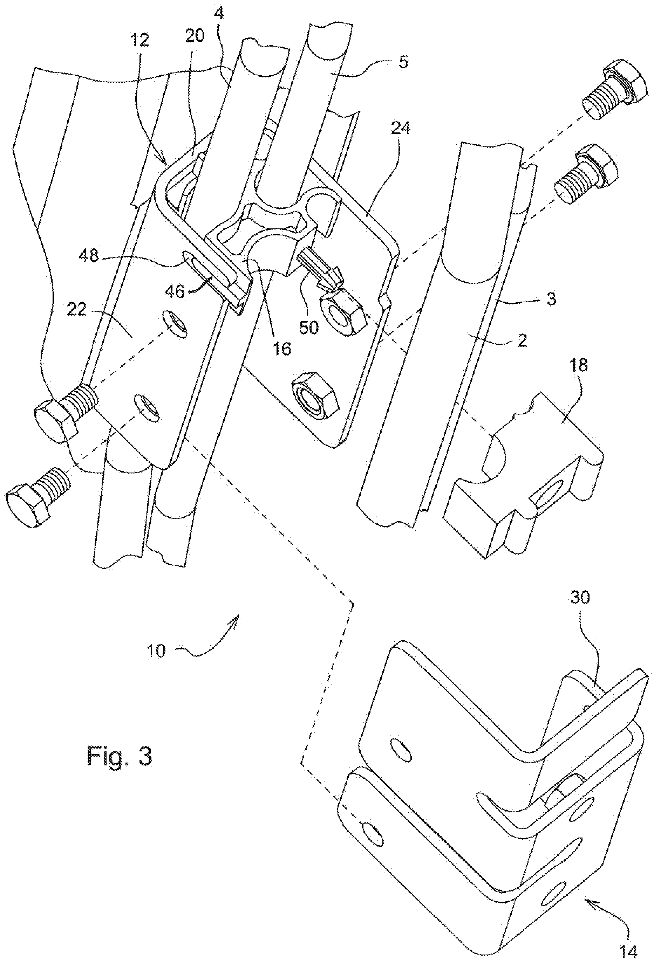

Referring to Fig. 1, a plurality of clamp assemblies 10 hold elongated parts like rigid lines 2 and 3 and flexible hoses 4 and 5 to a frame member 6 of a vehicle, such as a cab post of an agricultural tractor. As best seen in Figs. 2 and 3, each clamp assembly 10 includes a box-shaped housing 11 having an inner housing 12 and an outer housing 14, both with C, J or U-shaped cross sections. The inner housing 12 and the outer housing 14 enclose an inner half clamp member 16 and an outer half clamp member 18. Inner housing 12 includes a base wall 20 and a pair of side walls 22 and 24. Outer housing 14 includes a base wall 26 and a pair of side walls 28 and 30. The inner housing 12 and the outer housing 14 are preferably bolted together by screws.

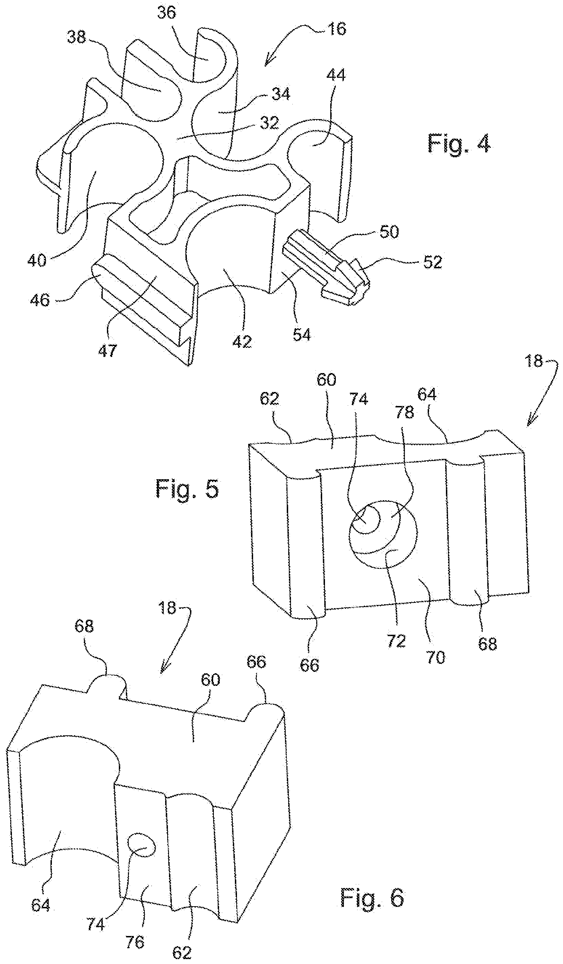

Referring now to Fig. 4, inner half clamp member 16 is preferably made of a rigid (plastic) material and includes a body 32 in which is formed a plurality of inner grooves 34, 36, 38 and 40, and one or more outer grooves 42 and 44. An elongated guide member 46 projects from a side 47 of the body 32 and is slidably received by a complimentary slot 48 formed in the side wall 22 of inner housing 12 as shown in Fig. 3. A post 50 with a pronged end 52 projects from surface 54 and away from inner groove 38.

Referring now to Figs. 5 and 6, outer half clamp member 18 is preferably made of a flexible or resilient material and includes a body 60 in which is formed a pair of inner recesses 62 and 64 which face towards and receive rigid lines 2 and 3. A pair of spaced apart ridges 66 and 68 extends along and projects from outer surface 70 of body 60. A larger diameter bore 72 extends partway into the body 60 from outer surface 70 and communicates with a smaller diameter bore 74 which extends partway into body 60 from inner surface 76. Bores 72 and 74 are separated by annular wall 78.

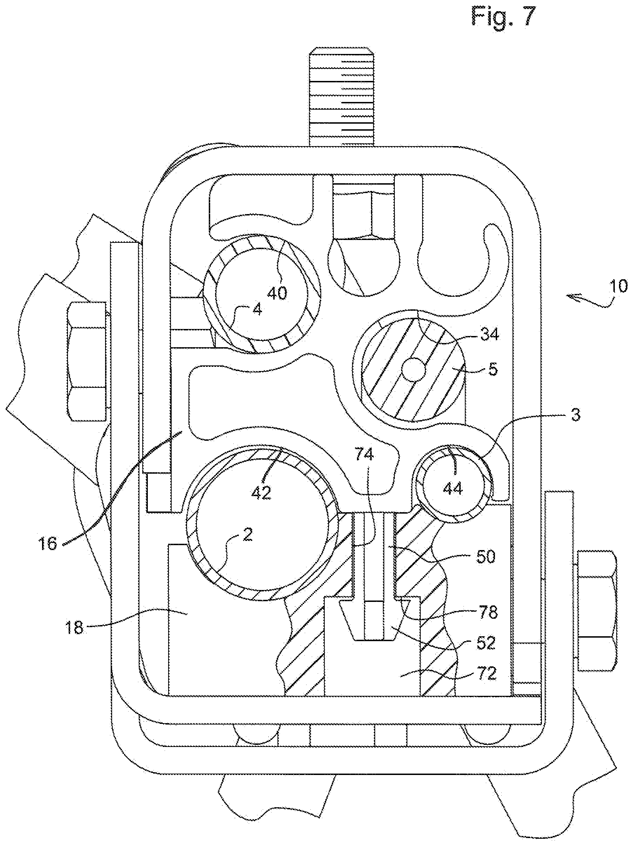

Referring now to Fig. 7, when the clamp assembly 10 is assembled, inner elongated parts formed by flexible hoses 4 and 5 are inserted into inner grooves 40 and 34, respectively, of inner half clamp member 16, and this arrangement is then slid into inner housing 12 with elongated guide member 46 being received by slot 48 as shown in Fig. 3. Then outer elongated parts formed by rigid lines 2 and 3 are moved into outer grooves 42 and 44, respectively. Thereafter outer half clamp member 18 is oriented and moved towards inner half clamp member 16 until post 50 moves through smaller diameter bore 74 and pronged end 52 moves past and engages annular wall 78 of larger diameter bore 72. Thus, rigid lines 2 and 3 are held between inner half clamp member 16 and outer half clamp member 18. Finally outer housing 14 is attached as a cover to inner housing 12 so that resilient outer half clamp member 18 is compressed between the inner half clamp member 16 and outer housing 14.

The post 50 may be used to temporarily attach inner half clamp member 16 to outer half clamp member 18, and to thereby hold both the outer half clamp member 18 as well as the rigid lines 2 and 3 in place until the outer housing 14 is assembled. When the outer housing 14 is attached in place, the resilient outer half clamp member 18 is compressed which holds the inner half clamp member 16, the rigid lines 2 and 3 and the flexible hoses 4 and 5 in place in a minimum amount of space.

With this design, the lines, hoses and harnesses can actually be routed in the space available while providing a consistent path for these components that deters abrasion. The elongated guide member 46 of inner half clamp member 16 slides into slot 48 in the inner housing 12 so that no additional fasteners are required to hold the inner half clamp member 16 during assembly. The resilient outer half clamp member 18 not only compresses to hold the lines, hoses and harnesses but, being a flexible or resilient material it can accommodate some variation in, or size of, the box-shaped housing 11 in which the lines, hoses and harnesses are routed.

The clamp assembly 10 can be used on many types of vehicles. It can be used in an agricultural tractor which has a structural cab frame (ROPS) to protect the operator. The lines, hoses and harnesses may be concealed behind a finish cover which is mounted to the outside of the frame.

## Claims

1. A clamp assembly for holding elongated parts, **characterized by** comprising an inner housing (12); an outer housing (14) for attaching to the inner housing (12); an inner half clamp member (16) received by the inner housing (12), the inner half clamp member (16) having an inner groove (34, 36, 38, 40) receiving flexible hoses (4, 5), and having an outer groove (42, 44) receiving rigid lines (2, 3), the inner half clamp member (16) being formed out of a rigid material; and an outer half clamp member (18), the outer half clamp member (18) being formed out of a resilient material, the outer half clamp member (18) being compressed between the outer housing (14) and the inner half clamp member (16), and the rigid lines (2, 3) being held between the inner half clamp member (16) and the outer half clamp member (18).

2. The clamp assembly according to claim 1, **characterized in that** the inner half clamp member (16) includes an elongated guide member (46) which is received by a slot (48) formed in the inner housing (12).

3. The clamp assembly according to claim 1 or 2, **characterized in that** the inner half clamp member (16) includes a post (50) which projects therefrom, and the outer half clamp member (18) includes a bore (72, 74) which receives the post (50).

4. The clamp assembly according to claim 3, **characterized in that** the post (50) has a pronged end (52) which engages an annular wall (78) of the outer half clamp member (18).

5. The clamp assembly according to one of claims 1 to 4, **characterized in that** the inner and outer housings (12, 14) enclose the inner and outer half clamp members (16, 18) and the rigid lines and flexible hoses (2, 3, 4, 5).

## Patentansprüche

1. Klemmanordnung zum Halten länglicher Teile, **dadurch gekennzeichnet, dass** sie ein inneres Gehäuse (12); ein äußeres Gehäuse (14) zur Befestigung an dem inneren Gehäuse (12); eine innere Klemmgliedhälfte (16), die von dem inneren Gehäuse (12) aufgenommen wird, wobei die innere Klemmgliedhälfte (16) eine innere Nut (34, 36, 38, 40), die flexible Schläuche (4, 5) aufnimmt, aufweist und eine äußere Nut (42, 44), die starre Leitungen (2, 3) aufnimmt, aufweist, wobei die innere Klemmgliedhälfte (16) aus einem starren Material gebildet ist; und eine äußere Klemmgliedhälfte (18) umfasst, wobei die aüßere Klemmgliedhälfte (18) aus einem elastischen Material gebildet ist, wobei die äußere Klemmgliedhälfte (18) zwischen dem äußeren Gehäuse (14) und der inneren Klemmgliedhälfte (16) zusammengedrückt ist und die starren Leitungen (2, 3) zwischen der inneren Klemmgliedhälfte (16) und der äußeren Klemmgliedhälfte (18) gehalten werden.

2. Klemmanordnung nach Anspruch 1, **dadurch gekennzeichnet, dass** die innere Klemmgliedhälfte (16) ein längliches Führungsglied (46) umfasst, das in einem in dem inneren Gehäuse (12) ausgebildeten Schlitz (48) aufgenommen ist.

3. Klemmanordnung nach Anspruch 1 oder 2, **dadurch gekennzeichnet, dass** die innere Klemmgliedhälfte (16) einen Zapfen (50) umfasst, der davon vorsteht, und die äußere Klemmgliedhälfte (18) eine Bohrung (72, 74) umfasst, die den Zapfen (5) aufnimmt.

4. Klemmanordnung nach Anspruch 3, **dadurch gekennzeichnet, dass** der Zapfen (5) ein gezinktes Ende (52) aufweist, das mit einer Ringwand (78) der äußeren Klemmgliedhälfte (18) in Eingriff gelangt.

5. Klemmanordnung nach einem der Ansprüche 1-4, **dadurch gekennzeichnet, dass** das innere und das äußere Gehäuse (12, 14) die innere und die äußere Klemmgliedhälfte (16, 18) und die starren Leitungen und flexiblen Schläuche (2, 3, 4, 5) umgeben.

## Revendications

1. Ensemble de fixation par serrage servant à maintenir des pièces allongées, **caractérisé en ce qu'**il comprend un logement intérieur (12) ; un logement extérieur (14) destiné à être attaché au logement intérieur (12) ; un demi-organe de fixation par serrage intérieur (16) reçu par le logement intérieur (12), le demi-organe de fixation par serrage intérieur (16) comportant une rainure intérieure (34, 36, 38, 40) recevant des tuyaux souples (4, 5) et comportant une rainure extérieure (42, 44) recevant des conduits rigides (2, 3), le demi-organe de fixation par serrage intérieur (16) étant constitué d'un matériau rigide ; et un demi-organe de fixation par serrage extérieur (18), le demi-organe de fixation par serrage extérieur (18) étant constitué d'un matériau élastique, le demi-organe de fixation par serrage extérieur (18) étant comprimé entre le logement extérieur (14) et le demi-organe de fixation par serrage intérieur (16), et les conduits rigides (2, 3) étant maintenus entre le demi-organe de fixation par serrage intérieur (16) et le demi-organe de fixation par serrage extérieur (18).

2. Ensemble de fixation par serrage selon la revendication 1, **caractérisé en ce que** le demi-organe de fixation par serrage intérieur (16) comprend un organe de guidage (46) allongé qui est reçu par une fente (48) formée dans le logement intérieur (12).

3. Ensemble de fixation par serrage selon la revendication 1 ou 2, **caractérisé en ce que** le demi-organe de fixation par serrage intérieur (16) comprend une tige (50) faisant saillie à partir de celui-ci, et le demi-organe de fixation par serrage extérieur (18) comprend un orifice (72, 74) qui reçoit la tige (50).

4. Ensemble de fixation par serrage selon la revendication 3, **caractérisé en ce que** la tige (50) comporte une extrémité dentelée (52) qui vient en prise avec une paroi annulaire (78) du demi-organe de fixation par serrage extérieur (18).

5. Ensemble de fixation par serrage selon l'une des revendications 1 à 4, **caractérisé en ce que** les logements intérieur et extérieur (12, 14) entourent les demi-organes de fixation par serrage intérieur et extérieur (16, 18) et les conduits rigides et les tuyaux souples (2, 3, 4, 5).
